# EUROPÄISCHE PATENTSCHRIFT

(11) **EP 4 121 321 B1**
(45) Veröffentlichungstag und Bekanntmachung des Hinweises auf die Patenterteilung: **16.08.2023**
(21) Anmeldenummer: 21718519.8
(22) Anmeldetag: 06.04.2021
(51) Int. Cl.: B60Q 1/00, B60Q 1/12, F21S 41/663, F21W 102/155

(54) **SCHEINWERFEREINRICHTUNG FÜR EIN FAHRZEUG, FAHRZEUG SOWIE VERFAHREN ZUM BETREIBEN EINER SCHEINWERFEREINRICHTUNG EINES FAHRZEUGS**
HEADLIGHT DEVICE FOR A VEHICLE, VEHICLE, AND METHOD FOR OPERATING A HEADLIGHT DEVICE OF A VEHICLE
DISPOSITIF DE PHARES D'UN VÉHICULE, VÉHICULE ET PROCÉDÉ D'ACTIONNEMENT D'UN DISPOSITIF DE PHARES D'UN VÉHICULE

(30) Priorität: 12.05.2020 DE 102020112844
(43) Veröffentlichungstag der Anmeldung: 25.01.2023
(73) Patentinhaber: Audi AG, 85045 Ingolstadt (DE)
(72) Erfinder: FUNKE, Carsten, 85051 Ingolstadt (DE); HAUG, Thomas, 85051 Ingolstadt (DE); ARMBRUSTER, Tilman, 85057 Ingolstadt (DE); HAMM, Michael, 72800 Eningen (DE)
(74) Vertreter: Hofstetter, Schurack & Partner
(86) Internationale Anmeldenummer: PCT/EP2021/058874
(87) Internationale Veröffentlichungsnummer: WO 2021/228469

(56) Entgegenhaltungen:
- EP-A1- 1 980 447
- EP-A1- 2 532 950
- EP-A1- 3 267 097
- EP-A1- 3 689 678
- WO-A1-2020/207610
- DE-A1-102014 216 545
- DE-A1-102017 128 125
- JP-A- 2015 118 833

## Beschreibung

Die Erfindung betrifft eine Scheinwerfereinrichtung für ein Fahrzeug, insbesondere für ein Kraftfahrzeug, gemäß dem Oberbegriff des Patentanspruchs 1. Des Weiteren betrifft die Erfindung ein Fahrzeug, insbesondere ein Kraftfahrzeug, gemäß dem Oberbegriff des Patentanspruchs 6. Die Erfindung betrifft auch ein Verfahren zum Betreiben einer Scheinwerfereinrichtung eines Fahrzeugs gemäß dem Oberbegriff des Patentanspruchs 7.

Die DE 10 2010 006 296 A1 offenbart ein Verfahren zur Fahrlichtsteuerung eines Fahrzeugs mit zumindest einem schwenkbaren Scheinwerfer. Der DE 10 2008 053 945 A1 ist ein Verfahren zum Steuern einer Scheinwerferanordnung für ein Fahrzeug als bekannt zu entnehmen. Außerdem ist aus der DE 10 2015 221 810 A1 ein Verfahren zum Steuern einer Scheinwerferanordnung für ein Fahrzeug bekannt.

Zudem offenbart die EP 3 267 097 A1 eine Fahrzeuglampe. Des Weiteren offenbart die EP 1 980 447 A1 eine kompakte Beleuchtungsvorrichtung. Ferner ist aus der DE 10 2014 216 545 A1 eine Scheinwerfereinrichtung für ein Kraftfahrzeug als bekannt zu entnehmen. Zudem offenbart die JP 2015 118833 A eine Lichtquelle. Des Weiteren ist aus der EP 2 532 950 A1 eine Fahrzeugfrontscheinwerfervorrichtung als bekannt zu entnehmen. Außerdem offenbart die DE 10 2017 128 125 A1 einen Scheinwerfer.

Aufgabe der vorliegenden Erfindung ist es, eine Scheinwerfereinrichtung für ein Fahrzeug, ein Fahrzeug sowie ein Verfahren zu schaffen, sodass eine besonders vorteilhafte Beleuchtung zumindest eines Teils einer Umgebung des Fahrzeugs realisiert werden kann.

Diese Aufgabe wird erfindungsgemäß durch eine Scheinwerfereinrichtung mit den Merkmalen des Patentanspruchs 1, durch ein Fahrzeug mit den Merkmalen des Patentanspruchs 6 sowie durch ein Verfahren mit den Merkmalen des Patentanspruchs 7 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Scheinwerfereinrichtung für ein Fahrzeug, insbesondere für ein Kraftfahrzeug. Dies bedeutet, dass das Fahrzeug in seinem vollständig hergestellten Zustand die Scheinwerfereinrichtung umfasst. Beispielsweise ist das Fahrzeug als ein Kraftfahrzeug, insbesondere als ein Kraftwagen und dabei vorzugsweise als ein Personenkraftwagen, ausgebildet. Die Scheinwerfereinrichtung kann an der Front oder aber an dem Heck des Fahrzeugs angeordnet sein. Die Scheinwerfereinrichtung weist, insbesondere wenigstens oder genau, zwei in Einbaulage der Scheinwerfereinrichtung in Fahrzeugquerrichtung voneinander beabstandete Scheinwerfer auf. Ist die Scheinwerfereinrichtung an der Front des Fahrzeugs angeordnet, sind die Scheinwerfer beispielsweise Frontscheinwerfer. Ist die Scheinwerfereinrichtung beispielsweise am Heck des Fahrzeugs angeordnet, so sind die Scheinwerfer beispielsweise Heckscheinwerfer beziehungsweise Rückleuchten. Die Scheinwerfereinrichtung nimmt ihre Einbaulage in vollständig hergestelltem Zustand und insbesondere dann ein, wenn das Fahrzeug in seinem vollständig hergestellten Zustand auf einer horizontalen Ebene steht, wobei das Fahrzeug beispielsweise über seine Bodenkontaktelemente in Fahrzeughochrichtung beziehungsweise in vertikaler Richtung nach unten hin an der Ebene abgestützt ist. Das jeweilige Bodenkontaktelement ist beispielsweise ein auch als Fahrzeugrad bezeichnetes Rad. Insbesondere ist die Einbaulage der Scheinwerfereinrichtung eine für den bestimmungsgemäßen Gebrauch der Scheinwerfereinrichtung vorgesehene Lage der Scheinwerfereinrichtung.

Die Scheinwerfer sind dazu ausgebildet, gleichzeitig ein jeweiliges Lichtbild bereitzustellen. Mit anderen Worten ist beispielsweise ein erster der Scheinwerfer dazu ausgebildet, ein erstes Lichtbild bereitzustellen, wobei der zweite Scheinwerfer dazu ausgebildet ist, ein zweites Lichtbild bereitzustellen. Dabei können die Scheinwerfer das erste Lichtbild und das zweite Lichtbild gleichzeitig bereitstellen. Das jeweilige Lichtbild ist durch jeweiliges Licht gebildet, welches von dem jeweiligen Scheinwerfer bereitgestellt wird beziehungsweise bereitzustellen ist. Mit anderen Worten, um das jeweilige Lichtbild bereitzustellen, das heißt zu erzeugen oder auszustrahlen, stellt der jeweilige Scheinwerfer Licht bereit, das heißt strahlt der jeweilige Scheinwerfer Licht aus, wobei aus dem Licht das jeweilige Lichtbild gebildet wird. Insbesondere ist das jeweilige Lichtbild ein solches Lichtbild, welches dann, wenn der jeweilige Scheinwerfer sein jeweiliges Lichtbild bereitstellt beziehungsweise wenn die Scheinwerfer die Lichtbilder gleichzeitig bereitstellen, an oder auf einer Oberfläche gebildet beziehungsweise erzeugt und somit beispielsweise von einer Person mit ihren menschlichen Augen optisch wahrnehmbar ist, wobei die Oberfläche mindestens fünf Meter, insbesondere mindestens oder genau zehn Meter, in Fahrzeuglängsrichtung oder in horizontaler Richtung von dem Fahrzeug oder von dem jeweiligen Scheinwerfer beabstandet ist und somit mindestens fünf Meter in horizontaler Richtung beziehungsweise in Fahrzeuglängsrichtung, welche beispielsweise mit der horizontalen Richtung zusammenfällt, vor oder hinter dem Fahrzeug beziehungsweise dem jeweiligen Scheinwerfer angeordnet ist. Dabei verläuft die Oberfläche in vertikaler Richtung und somit senkrecht zur horizontalen Richtung, wobei die Oberfläche eben beziehungsweise plan ist.

Um nun zumindest einen Teil einer Umgebung der Scheinwerfereinrichtung und somit des Fahrzeugs besonders vorteilhaft und bedarfsgerecht mittels der Lichtbilder beziehungsweise mittels der Scheinwerfereinrichtung beleuchten zu können, ist es erfindungsgemäß vorgesehen, dass bei einem gleichzeitigen Bereitstellen der Lichtbilder, das heißt dann, wenn die Scheinwerfer die Lichtbilder gleichzeitig bereitstellen, bezogen auf die Einbaulage der Scheinwerfereinrichtung ein erstes der Lichtbilder in vertikaler Richtung zumindest teilweise oberhalb des zweiten Lichtbilds angeordnet ist. Hierunter ist insbesondere zu verstehen, dass zumindest ein Teil des ersten Lichtbilds in vertikaler Richtung und somit beispielsweise in Fahrzeughochrichtung, welche mit der vertikalen Richtung zusammenfallen kann, oberhalb zumindest eines Teils des zweiten Lichtbilds angeordnet ist, wobei ein Lichtbildbereich, in welchem zumindest der Teil des ersten Lichtbilds angeordnet ist, frei von dem zweiten Lichtbild ist, sodass sich das zweite Lichtbild nicht in dem Lichtbildbereich befindet. Dabei ist beispielsweise der Lichtbildbereich in vertikaler Richtung oberhalb zumindest des Teils des zweiten Lichtbilds beziehungsweise oberhalb des zweiten Lichtbilds angeordnet. Ferner ist es vorzugsweise vorgesehen, dass ein zweiter Lichtbildbereich, in welchem der Teil des zweiten Lichtbilds angeordnet ist, frei von dem ersten Lichtbild ist, sodass das erste Lichtbild nicht in dem zweiten Lichtbildbereich angeordnet ist. Vorzugsweise ist es vorgesehen, dass zumindest der Teil des ersten Lichtbilds in vertikaler Richtung oberhalb des gesamtem zweiten Lichtbilds angeordnet ist. Um die Teile der Lichtbilder im Folgenden einfach und übersichtlich unterscheiden zu können, wird der Teil des ersten Lichtbilds auch als erster Teil des ersten Lichtbilds und der Teil des zweiten Lichtbilds auch als zweiter Teil des zweiten Lichtbilds bezeichnet.

Das Merkmal, dass bei dem gleichzeitigen Bereitstellen der Lichtbilder der erste Teil in vertikaler Richtung beziehungsweise in Fahrzeughochrichtung oberhalb des zweiten Teils des Lichtbilds angeordnet ist, bedeutet bezogen auf die zuvor genannte und beispielsweise durch eine Wand gebildete Oberfläche, dass dann, wenn die Lichtbilder auf der Oberfläche erzeugt werden beziehungsweise an der Oberfläche optisch wahrgenommen werden können, der erste Teil in vertikaler Richtung beziehungsweise in Fahrzeughochrichtung oberhalb des zweiten Teils angeordnet ist. Umgekehrt ausgedrückt ist zumindest der zweite Teil des zweiten Lichtbilds in vertikaler Richtung unterhalb zumindest des ersten Teils des ersten Lichtbilds. Das Merkmal, dass zumindest der erste Teil des ersten Lichtbilds in vertikaler Richtung oberhalb zumindest des zweiten Teils des zweiten Lichtbilds angeordnet ist, kann insbesondere umfassen, dass ein Flächenschwerpunkt und/oder eine optische Achse des ersten Lichtbilds in vertikaler Richtung oberhalb eines Flächenschwerpunkts und/oder einer optischen Achse des zweiten Lichtbilds angeordnet ist. Dabei ist beispielsweise das jeweilige Lichtbild insgesamt beziehungsweise vollständig betrachtet eine Fläche, die insbesondere den jeweiligen Flächenschwerpunkt aufweist.

Der Erfindung liegen insbesondere die folgenden Erkenntnisse zugrunde: Scheinwerfereinrichtungen für Fahrzeuge, wobei die Scheinwerfereinrichtungen auch als Beleuchtungseinrichtungen bezeichnet werden, werden üblicherweise immer symmetrisch an den jeweiligen Fahrzeugen angebracht. Des Weiteren werden üblicherweise alle Beleuchtungseinrichtungen so ausgerichtet, dass sie symmetrisch zur jeweiligen Fahrzeugmitte leuchten, insbesondere in Fahrzeughochrichtung beziehungsweise in vertikaler Richtung betrachtet. Beispielsweise leuchten Abblendlichtverteilungen aus den Beleuchtungseinrichtungen in horizontaler Richtung immer geradeaus. Dies ist zum Teil durch eine jeweilige Gesetzgebung vorgeschrieben, da beispielsweise pro Scheinwerfer verschiedene Lichtwerte separat erfüllt werden müssen.

Mit der Einführung von Pixel-Lichtquellen wie beispielsweise DMD (Digital Micro Mirrow Device, auch bekannt als DLP - Digital Light Processing) oder µ-AFS (Mikro-AFS, auch bekannt unter Mikro-LED oder HD-SSL) ergeben sich neue Möglichkeiten und Herausforderungen der Lichtbildabbildung. So können beispielsweise Projektionen auf der Straße oder an der zuvor genannten Wand dargestellt werden, wobei es jedoch dazu kommt, dass sich die Lichtbilder der Scheinwerfer überlappen. Die herkömmlichen Beleuchtungseinrichtungen weisen insbesondere den Nachteil auf, dass bei der Projektion von Symbolen auf der Straße etwaige Einstellfehler an den einzelnen Scheinwerfern besonders schnell sichtbar sind, da jeweilige Trennkanten der Lichtbilder beziehungsweise von die Lichtbilder bildenden und auch als Pixel bezeichneten Bildpunkten sowie Überlagerungen der Pixel besonders gut zu erkennen sind. Dies bewirkt üblicherweise auch einen dunklen Bereich zwischen den beiden Lichtbildern auf der Straße. Außerdem entsteht durch die Projektion auf die Straße eine Verzerrung, welche zu einem dunklen Trennsteg zwischen den Lichtbildern beziehungsweise zwischen durch die Lichtbilder beleuchteten Bereichen führen kann.

Um nun die Nachteile der horizontalen Überlappung zu vermeiden, ist es erfindungsgemäß vorgesehen, dass die Lichtbilder in vertikaler Richtung zumindest teilweise übereinander angeordnet sind.

Ferner ist es vorgesehen, dass ein erster Teil des ersten Lichtbilds in vertikaler Richtung oberhalb eines zweiten Teils des zweiten Lichtbilds angeordnet ist, wobei der erste Teil in einem ersten Lichtbildbereich und der zweite Teil in einem zweiten Lichtbildbereich angeordnet ist, und wobei der erste Lichtbildbereich frei von dem zweiten Lichtbild und der zweite Lichtbildbereich frei von dem ersten Lichtbild ist.

Zudem ist es vorgesehen, dass das erste Lichtbild an sich eine in Fahrzeugquerrichtung verlaufende erste Breite aufweist und das zweite Lichtbild an sich eine in Fahrzeugquerrichtung verlaufende zweite Breite aufweist, wobei die Breiten gleich sind.

Des Weiteren ist es vorgesehen, dass der in vertikaler Richtung oberhalb des zweiten Teils angeordnete erste Teil sich über die gesamte erste Breite erstreckt, sodass der erste Teil über die gesamte erste Breite in vertikaler Richtung oberhalb des zweiten Teils angeordnet ist, und der zweite Teil sich über die gesamte zweite Breite erstreckt, sodass der zweite Teil über die gesamte zweite Breite in vertikaler Richtung unterhalb des ersten Teils angeordnet ist.

Ferner ist es vorgesehen, dass sich die Lichtbilder in vertikaler Richtung, insbesondere bezogen auf die beziehungsweise an der Oberfläche, gegenseitig in jeweiligen Überlappungsbereichen überlappen. Mit anderen Worten ist es beispielsweise vorgesehen, dass sich jeweilige Überlappungsbereiche der Lichtbilder in vertikaler Richtung gegenseitig überlappen, sodass beispielsweise in einem dritten Lichtbildbereich sowohl der Überlappungsbereich des ersten Lichtbilds und somit ein weiterer Teil des ersten Lichtbilds als auch gleichzeitig der Überlappungsbereich des zweiten Lichtbilds und somit ein weiterer Teil des zweiten Lichtbilds angeordnet sind. Dabei schließt sich beispielsweise in vertikaler Richtung nach oben hin an die Überlappungsbereiche der erste Teil an, und beispielsweise schließt sich in vertikaler Richtung nach unten hin an die Überlappungsbereiche der zweite Teil des zweiten Lichtbilds an.

Bei einer Ausführungsform der Erfindung weist bei dem gleichzeitigen Bereitstellen der Lichtbilder das erste Lichtbild an sich, das heißt für sich alleine betrachtet, eine in vertikaler Richtung verlaufende erste Höhe auf, wobei das zweite Lichtbild an sich eine in vertikaler Richtung verlaufende zweite Höhe aufweist.

Insbesondere ermöglicht es die Erfindung, dass die Lichtbilder beziehungsweise die Scheinwerfer unterschiedliche Aufgaben übernehmen können. Somit kann beispielsweise mittels des zweiten Lichtbilds eine Straße beziehungsweise ein in Fahrzeuglängsrichtung vor dem Fahrzeug liegender Straßenteil einer Straße, entlang welcher das Fahrzeug fährt beziehungsweise auf welcher das Fahrzeug steht, beleuchtet werden, insbesondere derart, dass auf den Straßenteil wenigstens ein Symbol durch das Lichtbild projiziert werden kann. Dabei beziehungsweise währenddessen ist es möglich, beispielsweise mittels des ersten Lichtbilds ein Fernlicht und somit eine Fernausleuchtung zu realisieren und/oder Bereiche zu beleuchten, die in vertikaler Richtung oberhalb der Straße angeordnet sind.

Es ist denkbar, dass die Lichtbilder, insbesondere zusammengesetzt betrachtet, ein Gesamtlichtbild ergeben, oder aber die Lichtbilder sind unabhängige beziehungsweise nicht zusammenhängende Lichtbilder.

Es hat sich als besonders vorteilhaft gezeigt, wenn die Überlappungsbereiche jeweilige, in vertikaler Richtung verlaufende Erstreckungen aufweisen. Um dabei eine besonders vorteilhafte Beleuchtung realisieren zu können, ist es vorzugsweise vorgesehen, dass die Erstreckung des Überlappungsbereiches des ersten Lichtbilds höchstens 30 Prozent, insbesondere höchstens 20 Prozent und vorzugsweise höchstens 10 Prozent, der ersten Höhe beträgt. Alternativ oder zusätzlich ist es vorgesehen, dass die Erstreckung des Überlappungsbereiches des zweiten Lichtbilds höchstens 30 Prozent, insbesondere höchstens 20 Prozent und vorzugsweise höchstens 10 Prozent, der zweiten Höhe beträgt.

Um eine besonders vorteilhafte und bedarfsgerechte Beleuchtung der Umgebung realisieren zu können, ist es in weiterer Ausgestaltung der Erfindung vorgesehen, dass eines der Lichtbilder eine mehreckige oder runde, unterbrechungsfreie, zusammenhängende Lichtfläche aufweist, wobei ein Umgeben einer unbeleuchteten, das heißt nicht durch die Scheinwerfereinrichtung beleuchteten Fläche durch das eine Lichtbild unterbleibt. Im Rahmen der Erfindung und der vorliegenden Offenbarung ist - falls nichts anderes angegeben ist - unter einer unbeleuchteten Fläche eine solche Fläche zu verstehen, welche nicht durch die Scheinwerfereinrichtung beleuchtet wird. Das andere Lichtbild weist zumindest einen gebogenen oder gekrümmten Teilbereich auf, welcher eine unbeleuchtete Fläche umgibt, insbesondere derart, dass die unbeleuchtete Fläche durch den gekrümmten oder gebogenen Teilbereich in Umfangsrichtung der Fläche nur teilweise oder aber vollständig umlaufend umgeben ist. Den Lichtbildern und somit den Scheinwerfern kommen somit unterschiedliche Funktionen zu. Während beispielsweise das eine Lichtbild, insbesondere das erste Lichtbild, genutzt wird, um eine besonders großflächige Beleuchtung der Umgebung und dabei beispielsweise eine Fernlichtbeleuchtung beziehungsweise eine Fernlichtverteilung zu realisieren, wird beispielsweise das andere Lichtbild, insbesondere das zweite Lichtbild, genutzt, um den Teilbereich beispielsweise auf die Straße beziehungsweise auf die zuvor genannte Ebene zu projizieren. Hierzu umfasst beispielsweise das andere Lichtbild wenigstens ein Symbol wie beispielsweise einen Ring oder mehrere, ineinandergreifende beziehungsweise miteinander verwobene oder sich gegenseitig überlappende Ringe und/oder wenigstens eine Zahl. Somit ist es beispielsweise möglich, mittels des anderen Lichtbilds wenigstens eine Information auf die Straße beziehungsweise auf die Ebene zu projizieren, wobei diese Information beispielsweise vom Fahrer des Fahrzeugs optisch wahrgenommen werden kann, insbesondere während mittels des einen Lichtbilds eine großflächige Beleuchtung beziehungsweise Ausleuchtung der Umgebung realisiert werden kann.

Der jeweilige Scheinwerfer ist beispielsweise ein einfach auch als Modul bezeichnetes Lichtmodul. Beispielsweise ist das Modul ein digitales Modul, mittels welchem das Licht und somit das Lichtbild, insbesondere digital, erzeugt beziehungsweise bereitgestellt werden kann. Besonders vorzugsweise ist der jeweilige Scheinwerfer eine Pixellichtquelle, sodass das jeweilige Lichtbild durch eine Vielzahl von Bildpunkten beziehungsweise Pixeln gebildet ist beziehungsweise wird, die von dem jeweiligen Scheinwerfer bereitgestellt beziehungsweise erzeugt werden. Hierzu umfasst der jeweilige Scheinwerfer beispielsweise eine Mehrzahl von LEDs, welche das jeweilige Lichtbild beziehungsweise die Bildpunkte erzeugen.

Die Scheinwerfer sind vorzugsweise identisch beziehungsweise baugleich und dabei jedoch derart ausgerichtet oder angeordnet, dass das erste Lichtbild in vertikaler Richtung zumindest teilweise oberhalb des zweiten Lichtbilds angeordnet ist. Die Erfindung ermöglicht es insbesondere, mittels eines der Scheinwerfer und somit mittels eines der Lichtbilder des einen Scheinwerfers beispielsweise Fernlicht und/oder Kurvenlicht zu realisieren beziehungsweise umzusetzen, während mittels des anderen Lichtbilds und somit mittels des anderen Scheinwerfers beispielsweise ein Abblendlicht realisiert wird und somit Abblendlichtwerte erfüllt werden und/oder wenigstens eine digitale Projektion auf die Straße erzeugt wird, insbesondere derart, dass das Symbol beziehungsweise die Zahl auf die Straße projiziert wird. Unter der jeweiligen digitalen Projektion ist beispielsweise ein Baustellenlicht beziehungsweise ein Symbol eines Baustellenlichts zu verstehen, um den Fahrer vor einer Baustelle zu warnen und/oder eine Baustelle zu beleuchten. Ferner kann die digitale Projektion einen optischen Warnhinweis, das heißt ein optisches Warnsignal umfassen, mittels welchem beispielsweise der Fahrer des Fahrzeugs vor einer Gefahrensituation wie beispielsweise vor Glätte gewarnt wird. Ferner kann die digitale Projektion wenigstens eine Fahrerassistenzinformation umfassen, um den Fahrer beim Führen des Fahrzeugs zu unterstützen.

Alternativ oder zusätzlich können durch die Lichtbildern und somit mittels der Scheinwerfereinrichtung die folgenden, auch als Lichtfunktionen bezeichneten Funktionen realisiert werden: Grundsätzlich sind viele verschiedene Lichtverteilungen denkbar. Alternativ oder zusätzlich zu dem oben beschriebenen Kurvenlicht können beispielsweise folgende Lichtfunktionen durch die beispielsweise als digitales Modul ausgebildete Scheinwerfereinrichtung realisiert werden. Eine erste der Lichtfunktionen ist ein sogenanntes Stadtlicht. Hier wird die Hell-Dunkel-Grenze, insbesondere zwischen dem jeweiligen Lichtbild und einer sich daran anschließenden, unbeleuchteten, das heißt nicht mittels der Scheinwerfereinrichtung beleuchteten Umgebung, angepasst, insbesondere gegenüber einem sogenannten Autobahnlicht, um eine Blendung durch die Scheinwerfer von anderen Verkehrsteilnehmern in einer durch stationäre Beleuchtung gut ausgeleuchteten Stadt so gering wie möglich zu halten. Dabei ist somit beispielsweise eine Reduzierung der Leuchtweite vorgesehen. Eine zweite der Lichtfunktionen ist das sogenannte Autobahnlicht. Hier wird die Hell-Dunkel-Grenze, insbesondere gegenüber dem Stadtlicht, wird angehoben, um während eine Autobahnfahrt eine größere Reichweite zu haben, insbesondere gegenüber dem Stadtlicht, bei dem beispielsweise gegenüber dem Autobahnlicht die Hell-Dunkel-Grenze abgesenkt ist. Eine dritte der Funktionen ist ein sogenanntes Schlecht-Wetter-Licht. Hier wird ein Teil der Lichtverteilung ausgeblendet, um den Gegenverkehr bei nasser Fahrbahn nicht oder nicht übermäßig zu blenden. Eine vierte der Lichtfunktionen ist ein sogenanntes Baustellenlicht und/oder Spurführungslicht. Hier wird die Fahrzeugbreite wird auf den Boden durch einen in der Breite definierten Teppich oder entsprechende Linien entlang der Fahrtrichtung projiziert, um bei geringer Spurbreite eine bessere Spurführung zu ermöglichen. Alternativ oder zusätzlich sind noch viele weitere Lichtbilder und Lichtfunktionen denkbar - sowohl im Fernlichtbereich als auch im Stra-ßenprojektionsbereich, auch kombiniert.

Vorzugsweise ist wenigstens einer der Scheinwerfer dazu ausgebildet, das mittels des wenigstens einen Scheinwerfers bereitstellbare Lichtbild beziehungsweise das Symbol des Lichtbilds oder das durch das Lichtbild projizierbare oder projizierte Symbol mit einem Positivkontrast oder mit einem Negativkontrast darzustellen beziehungsweise zu projizieren. Unter dem Positivkontrast ist zu verstehen, dass das Symbol ein helles Symbol auf dunklem Untergrund ist beziehungsweise dass das Symbol an sich hell und dabei beispielsweise ein Teil des Lichtbilds ist und sich an das Symbol gegenüber dem Symbol dunklere Bereiche anschließen. Die dunklen Bereiche sind beispielsweise Teile des Lichtbilds, das heißt mittels des Lichts beleuchtete Bereiche, aber dunkler als das Symbol, oder die dunklen Bereiche sind unbeleuchtete, das heißt nicht mittels von den Scheinwerfern bereitgestelltem Licht beleuchtete Bereiche und somit beispielsweise keine Teile des jeweiligen Lichtbilds.

Unter dem Negativkontrast ist zu verstehen, dass das Symbol sozusagen ein dunkles Symbol auf hellem Untergrund ist beziehungsweise dass das Symbol an sich dunkel ist und sich an das Symbol gegenüber dem Symbol hellere Bereiche anschließen, die beispielsweise Teile des Lichtbilds und somit mittels des Lichts beleuchtete Bereiche sind. Das dunkle Symbol ist beispielsweise ein Teil des Lichtbilds, das heißt ein mittels des Lichts beleuchteter Bereich, aber dunkler als die hellen Bereiche, oder das dunkle Symbol ist ein unbeleuchteter, das heißt ein nicht mittels von den Scheinwerfern bereitgestelltem Licht beleuchteter Bereich und somit beispielsweise kein Teil des jeweiligen Lichtbilds.

Ein zweiter Aspekt der Erfindung betrifft ein vorzugsweise als Kraftfahrzeug, insbesondere als Kraftwagen und ganz vorzugsweise als Personenkraftwagen, ausgebildetes Fahrzeug, welches wenigstens eine Scheinwerfereinrichtung, insbesondere gemäß dem ersten Aspekt der Erfindung, umfasst. Die Scheinwerfereinrichtung umfasst, insbesondere wenigstens oder genau, zwei in Fahrzeugquerrichtung voneinander beabstandete Scheinwerfer, die dazu ausgebildet sind, gleichzeitig ein jeweiliges Lichtbild bereitzustellen.

Um nun eine besonders vorteilhafte Beleuchtung zumindest eines Teils einer Umgebung des Fahrzeugs zu realisieren, ist es bei dem zweiten Aspekt der Erfindung vorgesehen, dass bei einem gleichzeitigen Bereitstellen der Lichtbilder ein erstes der Lichtbilder in vertikaler Richtung zumindest teilweise oberhalb des zweiten Lichtbilds angeordnet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Um die Umgebung auf besonders einfache Weise besonders vorteilhaft beleuchten zu können, ist es bei einer Ausführungsform des zweiten Aspekts der Erfindung vorgesehen, dass die Scheinwerfer relativ zu einem beispielsweise als selbsttragende Karosserie ausgebildeten Aufbau des Fahrzeugs, dessen Fahrgastraum durch den Aufbau begrenzt ist, unbeweglich sind. Somit sind die Scheinwerfer keine verschwenkbaren Scheinwerfer, sondern relativ zu dem Aufbau unbeweglich, das heißt aufbaufest.

Die Lichtbilder können in Fahrzeugquerrichtung gleich breit sein, das heißt die gleiche Breite aufweisen. Ferner ist es denkbar, dass eines der Lichtbilder schmaler als das andere Lichtbild ist, sodass die Breite des einen Lichtbilds geringer als die Breite des anderen Lichtbilds ist. Dabei ist es vorzugseise vorgesehen, dass dann das eine Lichtbild das andere Lichtbild weder in Fahrzeugquerrichtung nach links noch in Fahrzeugquerrichtung nach rechts überragt.

Ein dritter Aspekt der Erfindung betrifft ein Verfahren zum Betreiben einer Scheinwerfereinrichtung, insbesondere gemäß dem ersten Aspekt der Erfindung, eines Fahrzeugs, insbesondere gemäß dem zweiten Aspekt der Erfindung. Die Scheinwerfereinrichtung des Fahrzeugs bei dem dritten Aspekt der Erfindung umfasst, insbesondere wenigstens oder genau, zwei in Fahrzeugquerrichtung voneinander beabstandete Scheinwerfer, die gleichzeitig ein jeweiliges Lichtbild bereitstellen.

Um nun die Umgebung des Fahrzeugs auf besonders vorteilhafte Weise beleuchten zu können, ist es bei dem dritten Aspekt der Erfindung vorgesehen, dass bei einem gleichzeitigen Bereitstellen der Lichtbilder ein erstes der Lichtbilder in vertikaler Richtung zumindest teilweise oberhalb des zweiten Lichtbilds angeordnet ist. Vorteile und vorteilhafte Ausgestaltungen des ersten Aspekts der Erfindung und des zweiten Aspekts der Erfindung sind als Vorteile und vorteilhafte Ausgestaltungen des dritten Aspekts der Erfindung anzusehen und umgekehrt.

Es ist vorgesehen, dass ein erster Teil des ersten Lichtbilds in vertikaler Richtung oberhalb eines zweiten Teils des zweiten Lichtbilds angeordnet wird, wobei der erste Teil in einem ersten Lichtbildbereich und der zweite Teil in einem zweiten Lichtbildbereich angeordnet wird, und wobei der erste Lichtbildbereich frei von dem zweiten Lichtbild und der zweite Lichtbildbereich frei von dem ersten Lichtbild ist.

Zudem ist es vorgesehen, dass das erste Lichtbild an sich eine in Fahrzeugquerrichtung verlaufende erste Breite aufweist und das zweite Lichtbild an sich eine in Fahrzeugquerrichtung verlaufende zweite Breite aufweist, wobei die Breiten gleich sind.

Des Weiteren ist es vorgesehen, dass der in vertikaler Richtung oberhalb des zweiten Teils angeordnete erste Teil sich über die gesamte erste Breite erstreckt, sodass der erste Teil über die gesamte erste Breite in vertikaler Richtung oberhalb des zweiten Teils angeordnet wird, und der zweite Teil sich über die gesamte zweite Breite erstreckt, sodass der zweite Teil über die gesamte zweite Breite in vertikaler Richtung unterhalb des ersten Teils angeordnet wird.

Ferner ist es vorgesehen, dass sich die Lichtbilder in vertikaler Richtung gegenseitig in jeweiligen Überlappungsbereichen überlappen.

Um die Umgebung besonders vorteilhaft beleuchten zu können, ist es vorzugsweise vorgesehen, dass den Scheinwerfern unterschiedliche Funktionen zukommen beziehungsweise die Scheinwerfer unterschiedliche Funktionen erfüllen. Dabei hat es sich als besonders vorteilhaft gezeigt, wenn bei der Kurvenfahrt des Fahrzeugs eines der Lichtbilder relativ zu dem Aufbau des Fahrzeugs, insbesondere der Kurve folgend, bewegt wird, während ein relativ zu dem Aufbau erfolgendes Bewegen des anderen Lichtbilds unterbleibt und vorzugsweise während ein relativ zu dem Aufbau erfolgendes Bewegen der Scheinwerfer an sich unterbleibt. Das eine Lichtbild wird somit genutzt, um ein Kurvenlicht zu realisieren, jedoch ohne den das eine Lichtbild bereitstellenden Scheinwerfer relativ zu dem Aufbau zu bewegen, insbesondere zu verschwenken. Bei beziehungsweise während der Realisierung des Kurvenlichts kann das andere Lichtbild genutzt werden, um die Umgebung besonders vorteilhaft zu beleuchten und beispielsweise den Fahrer mit Informationen zu versorgen, welche außerhalb des Fahrzeugs und somit in dessen Umgebung, insbesondere auf die Straße, projiziert werden. Insbesondere ist es somit bei der Ausführungsform vorgesehen, bei der Kurvenfahrt eine Bewegung dynamisch nur aus einem der Scheinwerfer zu generieren und somit nur das eine Lichtbild zu bewegen, während eine Bewegung des anderen Lichtbilds relativ zu dem Aufbau unterbleibt. Insbesondere können durch die Erfindung die folgenden Vorteile realisiert werden:
- Eine Symbolprojektion auf die Straße kann klar getrennt werden von einer Projektion einer Hell-Dunkel-Grenze und einem dynamischen Fernlicht.
- einfachere Ansteuerung und Synchronisierung bei Symbolprojektion
- deutlich höhere Beleuchtungsstärken mit bestehenden Mikro-LED-Lichtquellen oder anderen Lichtquellen realisierbar, wobei beispielsweise herkömmliche Mikro-LED-Quellen beziehungsweise Pixellichtquellen Aspektverhältnisse von 4:1 beziehungsweise 3:1 haben
- dadurch wird nur eine Scheinwerfer-Variante notwendig, da beispielsweise identische beziehungsweise baugleiche Scheinwerfer sowohl zur Verwendung bei Rechtsverkehr als auch zur Verwendung bei Linksverkehr verwendet werden können.

Eine technische Umsetzung der Erfindung erfolgt beispielsweise insbesondere derart, dass lichttechnische Module der Scheinwerfer in beiden Scheinwerfern gleich angebracht werden. Lediglich durch eine Ausrichtung der Module kann ein unterschiedlicher Ausleuchtbereich umgesetzt werden, derart, dass das erste Lichtbild zumindest teilweise in vertikaler Richtung oberhalb des zweiten Lichtbilds angeordnet ist.

Zur Erfindung gehören auch Weiterbildungen des erfindungsgemäßen Fahrzeugs und des erfindungsgemäßen Verfahrens, die Merkmale aufweisen, wie sie bereits im Zusammenhang mit den Weiterbildungen der erfindungsgemäßen Scheinwerfereinrichtung beschrieben worden sind. Aus diesem Grund sind die entsprechenden Weiterbildungen des erfindungsgemäßen Fahrzeugs und des erfindungsgemäßen Verfahrens hier nicht noch einmal beschrieben.

Das erfindungsgemäße Kraftfahrzeug ist bevorzugt als Kraftfahrzeug und ganz bevorzugt als Kraftwagen, insbesondere als Personenkraftwagen oder Lastkraftwagen, oder als Personenbus oder Motorrad ausgestaltet. Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Lichtbilds, welches mittels einer erfindungsgemäßen Scheinwerfereinrichtung insbesondere auf oder an einer vertikalen und ebenen Oberfläche, insbesondere einer Wand, erzeugbar ist beziehungsweise erzeugt wird, wobei Fig. 1 eine erste Variante des Lichtbilds zeigt;
- Fig. 2: eine schematische Darstellung einer zweiten Variante des Lichtbilds; und
- Fig. 3: eine schematische Darstellung einer dritten Variante des Lichtbilds.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden.

Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

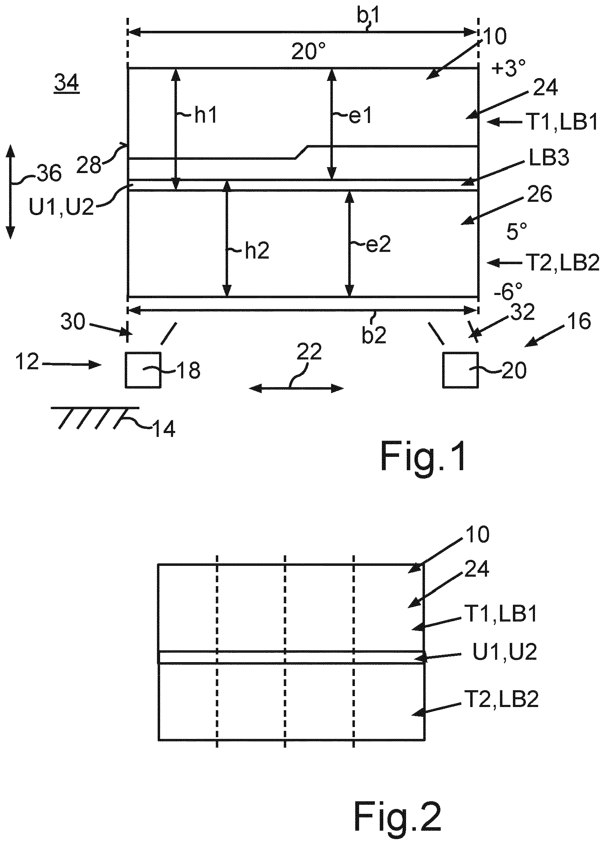

Fig. 1 zeigt in einer schematischen Darstellung eine erste Variante eines Gesamtlichtbilds 10, welches beispielsweise auf beziehungsweise an einer vertikalen, ebenen Oberfläche, insbesondere einer Wand, mittels einer in Fig. 1 besonders schematisch dargestellten Scheinwerfereinrichtung 12 eines Fahrzeugs erzeugbar ist beziehungsweise erzeugt wird. Das Fahrzeug ist vorzugsweise als Kraftfahrzeug, insbesondere als Kraftwagen, ausgebildet und weist einen auch als Innenraum bezeichneten Fahrgastraum für Insassen auf, welche sich in dem Fahrgastraum während einer Fahrt des Fahrzeugs aufhalten können. Der Fahrgastraum ist dabei durch einen insbesondere als selbsttragende Karosserie ausgebildeten Aufbau des Fahrzeugs begrenzt, wobei der Aufbau in Fig. 1 ausschnittsweise und besonders schematisch gezeigt und mit 14 bezeichnet ist. Bei dem in Fig. 1 gezeigten Ausführungsbeispiel ist die Scheinwerfereinrichtung 12, welche auch als Beleuchtungseinrichtung bezeichnet wird, an der Front 16 des Fahrzeugs angeordnet. Die Scheinwerfereinrichtung 12 umfasst zwei Scheinwerfer 18 und 20, welche somit als Frontscheinwerfer ausgebildet sind. Dabei zeigt Fig. 1 eine Einbaulage der Scheinwerfereinrichtung 12, welche ihre Einbaulage in vollständig hergestelltem Zustand des Fahrzeugs und insbesondere dann einnimmt, wenn das Fahrzeug auf einer horizontalen Ebene und dabei beispielsweise auf einer horizontalen Straße steht beziehungsweise entlang der Ebene beziehungsweise Straße fährt. Aus Fig. 1 ist erkennbar, dass die Scheinwerfer 18 und 20 in Fahrzeugquerrichtung voneinander beabstandet sind, wobei die Fahrzeugquerrichtung in Fig. 1 durch einen Doppelpfeil 22 veranschaulicht ist. Der Scheinwerfer 18 ist dazu ausgebildet, ein erstes Lichtbild 24 bereitzustellen. Der Scheinwerfer 20 ist dazu ausgebildet, ein zweites Lichtbild 26 bereitzustellen. Aus Fig. 1 ist erkennbar, dass die Scheinwerfer 18 und 20 dazu ausgebildet sind, die Lichtbilder 24 und 26 gleichzeitig bereitzustellen. Anhand von Fig. 1 bis 3 wird auch ein Verfahren zum Betreiben der Scheinwerfereinrichtung 12 beschrieben. Bei dem Verfahren stellen die Scheinwerfer 18 und 20 ihre Lichtbilder 24 und 26 gleichzeitig bereit. Die Lichtbilder 24 und 26 bilden beispielsweise das Gesamtlichtbild 10, sodass beispielsweise die Lichtbilder 24 und 26 an beziehungsweise auf der zuvor genannten und in Fig. 1 mit 28 bezeichneten Oberfläche, welche beispielsweise durch eine Wand gebildet ist, erzeugt beziehungsweise bereitgestellt werden. Mit anderen Worten, zum Bereitstellen und somit Erzeugen des Lichtbilds 24 stellt der Scheinwerfer 18 Licht 30 bereit, welches von dem Scheinwerfer 18 ausgestrahlt wird. Der Scheinwerfer 18 strahlt das Licht 30 gegen die Oberfläche 28, sodass auf der Oberfläche 28 das Lichtbild 26 mittels des Scheinwerfers 18 erzeugt, das heißt bereitgestellt wird. Demzufolge stellt der Scheinwerfer 20 Licht 32 bereit, welches von dem Scheinwerfer 20 bereitgestellt beziehungsweise ausgestrahlt und insbesondere gegen die Oberfläche 28 gestrahlt wird. Dabei bildet das Licht 32 das Lichtbild 26 auf beziehungsweise an der Oberfläche 28. Der jeweilige Scheinwerfer 18 beziehungsweise 20 ist vorzugsweise eine sogenannte Pixellichtquelle. Hierunter ist insbesondere zu verstehen, dass das jeweilige Lichtbild 24 beziehungsweise 26 durch jeweilige, auch als Bildpunkte bezeichnete Pixel gebildet ist, die von dem jeweiligen Scheinwerfer 18 beziehungsweise 20 bereitgestellt und dabei ausgestrahlt und insbesondere vorliegend gegen die Oberfläche 28 gestrahlt werden. Somit ist der jeweilige Scheinwerfer 18 beziehungsweise 20 ein jeweiliges, digitales Lichtmodul oder der jeweilige Scheinwerfer 18 beziehungsweise 20 umfasst ein solches, jeweiliges digitales Lichtmodul, welches beispielsweise in dem jeweiligen Scheinwerfer 18 beziehungsweise 20 beziehungsweise in einem jeweiligen Gehäuse des jeweiligen Scheinwerfers 18 beziehungsweise 20 angeordnet ist. Somit ist beispielsweise das Licht 30 beziehungsweise 32 digitales Licht, sodass beispielsweise das erste Lichtbild 24 ein erster digitaler Lichtanteil und das zweite Lichtbild 26 ein zweiter digitaler Lichtanteil ist.

Die vertikale Oberfläche 28 erstreckt sich senkrecht zur horizontalen Richtung und ist beispielsweise in horizontaler Richtung beziehungsweise in Fahrzeuglängsrichtung, welche beispielsweise mit der horizontalen Richtung zusammenfällt, mindestens fünf Meter, insbesondere mindestens oder genau zehn Meter, von dem Fahrzeug, insbesondere von der Front 16 des Fahrzeugs, oder von dem jeweiligen Scheinwerfer 18 beziehungsweise 20 beabstandet. Dabei ist es insbesondere denkbar, dass die Scheinwerfer 18 und 20 in Fahrzeuglängsrichtung beziehungsweise in horizontaler Richtung auf gleicher Höhe angeordnet sind, sodass die Scheinwerfer 18 und 20 in horizontaler Richtung beziehungsweise in Fahrzeuglängsrichtung beispielsweise gleich weit von der Oberfläche 28 beabstandet sind. Die Lichtbilder 24 und 26, die mittels der Scheinwerfer 18 und 20 auf die beschriebene Weise auf beziehungsweise an der Oberfläche 28 erzeugt werden, können beispielsweise von den sich im Fahrgastraum aufhaltenden Insassen und somit insbesondere von dem Fahrer des Fahrzeugs optisch wahrgenommen werden. Es ist erkennbar, dass die Oberfläche 28 außerhalb des Fahrgastraums und dabei außerhalb des Fahrzeugs angeordnet ist und beispielsweise in Fahrzeuglängsrichtung vor dem Fahrzeug angeordnet ist. Somit ist die Oberfläche 28 in einer in Fig. 1 mit 34 bezeichneten Umgebung des Fahrzeugs angeordnet, sodass auch die Lichtbilder 24 und 26 in der Umgebung 34 angeordnet sind beziehungsweise erzeugt werden.

Um nun die Umgebung 34 besonders vorteilhaft und insbesondere besonders bedarfsgerecht beleuchten zu können, ist bei einem gleichzeitigen Bereitstellen der Lichtbilder 24 und 26 das Lichtbild 24 in vertikaler Richtung beziehungsweise in Fahrzeughochrichtung, welche beispielsweise mit der vertikalen Richtung zusammenfällt, zumindest teilweise oberhalb des zweiten Lichtbilds 26 angeordnet. Dabei ist in Fig. 1 die vertikale Richtung durch einen Doppelpfeil 36 veranschaulicht. Bei dem in Fig. 1 gezeigten Ausführungsbeispiel ist ein erster Teil T1 des Lichtbilds 24 in vertikaler Richtung oberhalb eines zweiten Teils T2 des zweiten Lichtbilds 26 angeordnet, wobei der erste Teil T1 in einem ersten Lichtbildbereich LB1 und der zweite Teil T2 in einem zweiten Lichtbildbereich LB2 angeordnet ist. Dabei ist der erste Lichtbildbereich LB1 frei von dem zweiten Lichtbild 26, und der Lichtbildbereich LB2 ist frei von dem ersten Lichtbild 24. Dies bedeutet, dass das Lichtbild 26 nicht in dem Lichtbildbereich LB1 angeordnet ist, und das Lichtbild 24 ist nicht im Lichtbildbereich LB2 angeordnet.

Das erste Lichtbild 24 an sich weist eine in vertikaler Richtung verlaufende erste Höhe h1 auf, wobei das zweite Lichtbild 26 an sich eine in vertikaler Richtung verlaufende zweite Höhe h2 aufweist. Der in vertikaler Richtung oberhalb des Lichtbilds 26 angeordnete und sich somit in vertikaler Richtung nach oben hin an das Lichtbild 26 anschließende Teil T1 des Lichtbilds 24 weist eine in vertikaler Richtung verlaufende erste Erstreckung e1 auf, welche mehr als die Hälfte der Höhe h1 ist. Somit erstreckt sich der Teil T1 über mehr als die Hälfte der ersten Höhe h1. Entsprechend weist der in vertikaler Richtung unterhalb des Lichtbilds 24 angeordnete und sich somit in vertikaler Richtung nach unten hin an das Lichtbild 24 anschließende zweite Teil T2 des Lichtbilds 26 eine in vertikaler Richtung verlaufende zweite Erstreckung e2 auf, welche mehr als die Hälfte der zweiten Höhe h2 beträgt. Somit erstreckt sich der zweite Teil T2 über mehr als die Hälfte der zweiten Höhe h2.

Beispielsweise bezogen auf eine horizontale Bezugsebene, welche senkrecht zur Oberfläche 28 verläuft und beispielsweise bezogen auf die Fahrzeughochrichtung beziehungsweise auf die vertikale Richtung durch die Mitte des Fahrzeugs beziehungsweise durch die Mitte der Front 16 des Fahrzeugs verläuft und insbesondere vor dem Hintergrund, dass sich das jeweilige Licht 30 beziehungsweise 32 zumindest bezogen auf die vertikale Richtung kegelförmig von dem jeweiligen Scheinwerfer 18 beziehungsweise 20 weg erstreckt, erstreckt sich beispielsweise das Lichtbild 26 von -6 Grad in vertikaler Richtung nach oben bis zu +1 Grad, während sich beispielsweise das Lichtbild 24 von -2 Grad in vertikaler Richtung nach oben hin bis +3 Grad erstreckt. Eine jeweilige Ausdehnung des jeweiligen Lichtbilds 24 beziehungsweise 26 in horizontaler Richtung und somit in Fahrzeugquerrichtung nach links und rechts beträgt beispielsweise 20 Grad. Bei dem in Fig. 1 gezeigten Ausführungsbeispiel weist das erste Lichtbild 24 an sich eine in Fahrzeugquerrichtung verlaufende erste Breite b auf, wobei das zweite Lichtbild 26 an sich eine in Fahrzeugquerrichtung verlaufende zweite Breite b2 aufweist. Dabei ist es vorliegend vorgesehen, dass die Breiten b1 und b2 gleich sind. Der in vertikaler Richtung oberhalb des zweiten Teils T2 angeordnete Teil T1 erstreckt sich dabei über die gesamte Breite b1, sodass der Teil T1 über die gesamte Breite b1 in vertikaler Richtung oberhalb des Teils T2 beziehungsweise des Lichtbilds 26 angeordnet ist. Der Teil T2 erstreckt sich über die gesamte Breite b2, sodass der Teil T2 über die gesamte Breite b2 in vertikaler Richtung unterhalb des Teils T1 beziehungsweise des Lichtbilds 24 angeordnet ist. Des Weiteren ist es bei dem in Fig. 1 gezeigten Ausführungsbeispiel vorgesehen, dass sich jeweilige Überlappungsbereiche U1 und U2 der Lichtbilder 24 und 26 in vertikaler Richtung überlappen. Dies bedeutet, dass sowohl der Überlappungsbereich U1 des Lichtbilds 24 als auch der Überlappungsbereich U2 des Lichtbilds 26 gleichzeitig in einem den Überlappungsbereichen U1 und U2 gemeinsamen, dritten Lichtbildbereich LB3 angeordnet sind. Dabei schließt sich der Teil T1 in vertikaler Richtung nach oben hin und der Teil T2 in vertikaler Richtung nach unten hin an die Überlappungsbereiche U1 und U2 an.

Fig. 2 zeigt eine zweite Variante des Gesamtlichtbilds 10. Die zweite Variante unterscheidet sich beispielsweise dadurch von der ersten Variante, dass beispielsweise bei der zweiten Variante die Überlappungsbereiche U1 und U2 in vertikaler Richtung größer beziehungsweise höher sind als bei der ersten Variante. Beispielsweise erstrecken sich die Überlappungsbereiche U1 und U2 über 1,5 Grad bis 5 Grad, insbesondere über 1,5 Grad, über 3 Grad oder über 5 Grad.

Bezogen auf die zuvor genannte Ebene beziehungsweise Straße, auf der beispielsweise das Fahrzeug steht, wird beispielsweise das Lichtbild 26, insbesondere der Teil T2, zumindest überwiegend, insbesondere vollständig, auf die Ebene geleuchtet, während das Lichtbild 24, insbesondere der Teil T1, zumindest überwiegend, insbesondere vollständig, in vertikaler Richtung oberhalb der Straße angeordnet ist.

In der Folge ist es möglich, den jeweiligen Scheinwerfern 18 und 20 jeweilige, individuelle Funktionen zukommen zu lassen. Das Lichtbild 24 wird hierbei beispielsweise genutzt, um oberhalb der Straße angeordnete Bereiche zu beleuchten und/oder eine Fernlichtausleuchtung beziehungsweise ein Fernlicht zu realisieren, während beispielsweise das Lichtbild 26 genutzt wird, um auf die Straße wenigstens ein Symbol und/oder wenigstens eine Zahl und somit beispielsweise eine Fahrerassistenzinformation zu projizieren, durch die der Fahrer beim Führen des Fahrzeugs unterstützt werden kann. Insbesondere ist es dabei möglich, beispielsweise durch das Lichtbild 26, Nassreflexionen zu vermeiden. Beispielsweise können nasse Bereiche der auch als Fahrbahn bezeichneten Straße ausgeblendet, das heißt nicht beleuchtet werden und somit unbeleuchtet bleiben, um aus einer etwaigen Beleuchtung dieser nassen Bereiche resultierende Reflexionen und somit Blendungen des Fahrers zu vermeiden.

Alternativ zu den in Fig. 1 und 2 gezeigten Ausführungsbeispielen, bei denen sich die Lichtbilder 24 und 26 in vertikaler Richtung gegenseitig überlappen, kann vorgesehen sein, dass ein gegenseitiges Überlappen der Lichtbilder 24 und 26 unterbleibt.

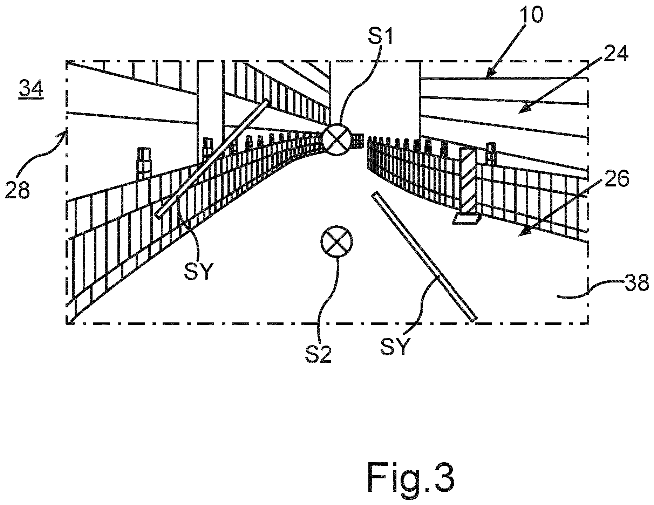

Schließlich zeigt Fig. 3 eine dritte Variante des Gesamtlichtbilds 10 beziehungsweise der Lichtbilder 24 und 26. In Fig. 3 ist ein erster Flächenschwerpunkt des ersten Lichtbilds 26 mit S1 bezeichnet, und ein zweiter Flächenschwerpunkt des Lichtbilds 26 ist mit S2 bezeichnet. Dabei ist es vorgesehen, dass dadurch, dass das Lichtbild 24 in vertikaler Richtung zumindest teilweise oberhalb des Lichtbilds 26 angeordnet ist, der Flächenschwerpunkt S1 in vertikaler Richtung oberhalb des Flächenschwerpunkts S2 angeordnet ist. Dadurch kann eine besonders vorteilhafte Beleuchtung der Umgebung 34 realisiert werden. Insbesondere ist es beispielsweise denkbar, in Fig. 3 mit SY bezeichnete Symbole auf die in Fig. 3 mit 38 bezeichnete Straße und/oder gegen die Oberfläche 28 zu projizieren, um beispielsweise den Fahrer beim Fahren des Fahrzeugs zu unterstützen. Während somit beispielsweise eines der Lichtbilder 24 und 26 ein flächiges, insbesondere vollflächiges, Lichtbild ist, welches keinen unbeleuchteten Bereich umgibt, umfasst das andere Lichtbild 26 beziehungsweise 24 Symbole wie beispielsweise Ringe und somit beispielsweise wenigstens einen gekrümmten oder bogenförmigen Teilbereich, welche beispielsweise einen unbeleuchteten Bereich zumindest teilweise, insbesondere vollständig umlaufend, umgibt. Dadurch kann eine besonders vorteilhafte und bedarfsgerechte Beleuchtung der Umgebung 34 gewährleistet werden.

## Patentansprüche

1. Scheinwerfereinrichtung (12) für ein Fahrzeug, mit zwei in Einbaulage der Scheinwerfereinrichtung (12) in Fahrzeugquerrichtung (22) voneinander beabstandeten Scheinwerfern (18, 20), welche dazu ausgebildet sind, gleichzeitig ein jeweiliges Lichtbild (24, 26) bereitzustellen, wobei der jeweilige Scheinwerfer (18, 20) eine als Lichtmodul ausgebildete Pixellichtquelle ist, sodass das jeweilige Lichtbild (24, 26) durch eine Vielzahl von Bildpunkten zu bilden ist, die von dem jeweiligen Scheinwerfer (18, 20) bereitstellbar sind, wobei der jeweilige Scheinwerfer (18, 20) eine Mehrzahl von LEDs umfasst, mittels welchen die Bildpunkte erzeugbar sind, und wobei bei einem gleichzeitigen Bereitstellen der Lichtbilder (24, 26) bezogen auf die Einbaulage der Scheinwerfereinrichtung (12) ein erstes der Lichtbilder (24, 26) in vertikaler Richtung (36) zumindest teilweise oberhalb des zweiten Lichtbilds (26) angeordnet ist, wobei
• ein erster Teil (T1) des ersten Lichtbilds (24) in vertikaler Richtung oberhalb eines zweiten Teils (T2) des zweiten Lichtbilds (26) angeordnet ist, wobei der erste Teil (T1) in einem ersten Lichtbildbereich (LB1) und der zweite Teil (T2) in einem zweiten Lichtbildbereich (LB2) angeordnet ist, und wobei der erste Lichtbildbereich (LB1) frei von dem zweiten Lichtbild (26) und der zweite Lichtbildbereich (LB2) frei von dem ersten Lichtbild (24) ist,
**dadurch gekennzeichnet, dass**
• das erste Lichtbild (24) an sich eine in Fahrzeugquerrichtung verlaufende erste Breite (b1) aufweist und das zweite Lichtbild (26) an sich eine in Fahrzeugquerrichtung verlaufende zweite Breite (b2) aufweist, wobei die Breiten (b1, b2) gleich sind, und
• der in vertikaler Richtung oberhalb des zweiten Teils (T2) angeordnete erste Teil (T1) sich über die gesamte erste Breite (b1) erstreckt, sodass der erste Teil (T1) über die gesamte erste Breite (b1) in vertikaler Richtung oberhalb des zweiten Teils (T2) angeordnet ist, und der zweite Teil (T2) sich über die gesamte zweite Breite (b2) erstreckt, sodass der zweite Teil (T2) über die gesamte zweite Breite (b2) in vertikaler Richtung unterhalb des ersten Teils (T1) angeordnet ist, und
• sich die Lichtbilder (24, 26) in vertikaler Richtung gegenseitig in jeweiligen Überlappungsbereichen (U1, U2) überlappen.

2. Scheinwerfereinrichtung (12) nach Anspruch 1,
**dadurch gekennzeichnet, dass**
bei dem gleichzeitigen Bereitstellen der Lichtbilder (24, 26) das erste Lichtbild (24) an sich eine in vertikaler Richtung (36) verlaufende erste Höhe (h1) und das zweite Lichtbild (26) an sich eine in vertikaler Richtung (36) verlaufende zweite Höhe (h2) aufweist.

3. Scheinwerfereinrichtung (12) nach Anspruch 2,
**dadurch gekennzeichnet, dass**
die Überlappungsbereiche (U1, U2) jeweilige, in vertikaler Richtung (36) verlaufende Erstreckungen aufweisen, wobei:
- die Erstreckung des Überlappungsbereiches (U1) des ersten Lichtbilds (24) höchstens 30%, insbesondere höchstens 20% und vorzugsweise höchstens 10%, der ersten Höhe (h1) beträgt und/oder
- die Erstreckung des Überlappungsbereiches (U2) des zweiten Lichtbilds (26) höchstens 30%, insbesondere höchstens 20% und vorzugsweise höchstens 10%, der zweiten Höhe (h2) beträgt.

4. Scheinwerfereinrichtung (12) nach einem der vorhergehenden Ansprüche,
**dadurch gekennzeichnet, dass**
bei dem gleichzeitigen Bereitstellen der Lichtbilder (24, 26):
- eines der Lichtbilder (24, 26) eine mehreckige oder runde, unterbrechungsfreie, zusammenhängende Lichtfläche ist, wobei ein Umgeben einer unbeleuchteten Fläche durch das eine Lichtbild (24, 26) unterbleibt; und
- das andere Lichtbild (26, 24) zumindest einen gebogenen oder gekrümmten Teilbereich aufweist, welcher eine unbeleuchtete Fläche umgibt.

5. Fahrzeug, mit wenigstens einer Scheinwerfereinrichtung (12) nach einem der vorhergehenden Ansprüche.

6. Fahrzeug nach Anspruch 5,
**dadurch gekennzeichnet, dass**
die Scheinwerfer (18, 20) relativ zu einem Aufbau (14) des Fahrzeugs, dessen Fahrgastraum durch den Aufbau (14) begrenzt ist, unbeweglich sind.

7. Verfahren zum Betreiben einer Scheinwerfereinrichtung (12) eines Fahrzeugs, dessen Scheinwerfereinrichtung (12) zwei in Fahrzeugquerrichtung (22) voneinander beabstandete Scheinwerfer (18, 20) aufweist, die gleichzeitig ein jeweiliges Lichtbild (24, 26) bereitstellen,
wobei der jeweilige Scheinwerfer (18, 20) eine als Lichtmodul ausgebildete Pixellichtquelle ist, sodass das jeweilige Lichtbild (24, 26) durch eine Vielzahl von Bildpunkten gebildet ist, die von dem jeweiligen Scheinwerfer (18, 20) bereitgestellt werden, wobei der jeweilige Scheinwerfer (18, 20) eine Mehrzahl von LEDs umfasst, welche die Bildpunkte erzeugen, und wobei bei einem gleichzeitigen Bereitstellen der Lichtbilder (24, 26) ein erstes der Lichtbilder (24, 26) in vertikaler Richtung (36) zumindest teilweise oberhalb des zweiten Lichtbilds (26) angeordnet ist.
wobei
• ein erster Teil (T1) des ersten Lichtbilds (24) in vertikaler Richtung oberhalb eines zweiten Teils (T2) des zweiten Lichtbilds (26) angeordnet wird, wobei der erste Teil (T1) in einem ersten Lichtbildbereich (LB1) und der zweite Teil (T2) in einem zweiten Lichtbildbereich (LB2) angeordnet wird, und wobei der erste Lichtbildbereich (LB1) frei von dem zweiten Lichtbild (26) und der zweite Lichtbildbereich (LB2) frei von dem ersten Lichtbild (24) ist,
**dadurch gekennzeichnet, dass** :
• das erste Lichtbild (24) an sich eine in Fahrzeugquerrichtung verlaufende erste Breite (b1) aufweist und das zweite Lichtbild (26) an sich eine in Fahrzeugquerrichtung verlaufende zweite Breite (b2) aufweist, wobei die Breiten (b1, b2) gleich sind, und
• der in vertikaler Richtung oberhalb des zweiten Teils (T2) angeordnete erste Teil (T1) sich über die gesamte erste Breite (b1) erstreckt, sodass der erste Teil (T1) über die gesamte erste Breite (b1) in vertikaler Richtung oberhalb des zweiten Teils (T2) angeordnet wird, und der zweite Teil (T2) sich über die gesamte zweite Breite (b2) erstreckt, sodass der zweite Teil (T2) über die gesamte zweite Breite (b2) in vertikaler Richtung unterhalb des ersten Teils (T1) angeordnet wird, und
• sich die Lichtbilder (24, 26) in vertikaler Richtung gegenseitig in jeweiligen Überlappungsbereichen (U1, U2) überlappen.

8. Verfahren nach Anspruch 7,
**dadurch gekennzeichnet, dass**
bei einer Kurvenfahrt des Fahrzeugs eines der Lichtbilder relativ zu einem Aufbau des Fahrzeugs, dessen Fahrgastraum durch den Aufbau begrenzt ist, bewegt wird, während ein relativ zu dem Aufbau erfolgendes Bewegen des anderen Lichtbilds unterbleibt.

## Claims

1. A headlamp device (12) for a vehicle, with two headlamps (18, 20) spaced from each other in vehicle transverse direction (22) in installation position of the headlamp device (12), which are formed to simultaneously provide a respective light image (24, 26),
wherein the respective headlamp (18, 20) is a pixel light source formed as a light module such that the respective light image (24, 26) is to be formed by a plurality of image points, which can be provided by the respective headlamp (18, 20), wherein the respective headlamp (18, 20) includes a plurality of LEDs, by means of which the image points can be generated, and wherein upon simultaneous provision of the light images (24, 26), a first one of the light images (24, 26) is at least partially arranged above the second light image (26) in vertical direction (36) related to the installation position of the headlamp device (12),
wherein
• a first part (T1) of the first light image (24) is arranged above a second part (T2) of the second light image (26) in vertical direction, wherein the first part (T1) is arranged in a first light image area (LB1) and the second part (T2) is arranged in a second light image area (LB2), and wherein the first light image area (LB1) is free from the second light image (26) and the second light image area (LB2) is free from the first light image (24),
**characterized in that**
• the first light image (24) as such has a first width (b1) extending in vehicle transverse direction and the second light image (26) as such has a second width (b2) extending in vehicle transverse direction, wherein the widths (b1, b2) are identical, and
• the first part (T1) arranged above the second part (T2) in vertical direction extends over the entire first width (b1) such that the first part (T1) is arranged above the second part (T2) in vertical direction over the entire first width (b1), and the second part (T2) extends over the entire second width (b2) such that the second part (T2) is arranged below the first part (T1) in vertical direction over the entire second width (b2), and
• the light images (24, 26) overlap each other in vertical direction in respective overlap areas (U1, U2).

2. The headlamp device (12) according to claim 1,
**characterized in that**
upon the simultaneous provision of the light images (24, 26), the first light image (24) as such has a first height (h1) extending in vertical direction (36) and the second light image (26) as such has a second height (h2) extending in vertical direction (36).

3. The headlamp device (12) according to claim 2,
**characterized in that**
the overlap areas (U1, U2) have respective extents extending in vertical direction (36), wherein:
the extent of the overlap area (U1) of the first light image (24) is at most 30 %, in particular at most 20 % and preferably at most 10 %, of the first height (h1), and/or
- the extent of the overlap area (U2) of the second light image (26) is at most 30 %, in particular at most 20 % and preferably at most 10 %, of the second height (h2).

4. The headlamp device (12) according to any one of the preceding claims,
**characterized in that**
upon the simultaneous provision of the light images (24, 26):
- one of the light images (24, 26) is a polygonal or round, uninterrupted, contiguous light surface, wherein surrounding an unilluminated surface by the one light image (24, 26) is omitted; and
- the other light image (26, 24) comprises at least one bent or curved partial area, which surrounds an unilluminated surface.

5. A vehicle with at least one headlamp device (12) according to any one of the preceding claims.

6. The vehicle according to claim 5,
**characterized in that**
the headlamps (18, 20) are immovable in relation to a body (14) of the vehicle, the passenger compartment of which is delimited by the body (14).

7. A method for operating a headlamp device (12) of a vehicle, the headlamp device (12) of which comprises two headlamps (18, 20) spaced from each other in vehicle transverse direction (22), which simultaneously provide a respective light image (24, 26),
wherein the respective headlamp (18, 20) is a pixel light source formed as a light module such that the respective light image (24, 26) is to be formed by a plurality of image points, which are provided by the respective headlamp (18, 20), wherein the respective headlamp (18, 20) includes a plurality of LEDs, which generate the image points, and wherein upon simultaneous provision of the light images (24, 26), a first one of the light images (24, 26) is at least partially arranged above the second light image (26) in vertical direction (36) related to the installation position of the headlamp device (12),
wherein
• a first part (T1) of the first light image (24) is arranged above a second part (T2) of the second light image (26) in vertical direction, wherein the first part (T1) is arranged in a first light image area (LB1) and the second part (T2) is arranged in a second light image area (LB2), and wherein the first light image area (LB1) is free from the second light image (26) and the second light image area (LB2) is free from the first light image (24),
**characterized in that**:
• the first light image (24) as such has a first width (b1) extending in vehicle transverse direction and the second light image (26) as such has a second width (b2) extending in vehicle transverse direction, wherein the widths (b1, b2) are identical, and
• the first part (T1) arranged above the second part (T2) in vertical direction extends over the entire first width (b1) such that the first part (T1) is arranged above the second part (T2) in vertical direction over the entire first width (b1), and the second part (T2) extends over the entire second width (b2) such that the second part (T2) is arranged below the first part (T1) in vertical direction over the entire second width (b2), and
• the light images (24, 26) overlap each other in vertical direction in respective overlap areas (U1, U2).

8. The method according to claim 7,
**characterized in that**
in cornering of the vehicle, one of the light images is moved in relation to a body of the vehicle, the passenger compartment of which is delimited by the body, while movement of the other light image effected in relation to the body is omitted.

## Revendications

1. Dispositif de phares (12) pour un véhicule, comportant deux phares (18, 20) espacés l'un de l'autre dans une direction transversale de véhicule (22) dans une position de montage du dispositif de phares (12), lesquels phares sont configurés pour produire simultanément un motif lumineux (24, 26) respective, le phare (18, 20) respectif étant une source de lumière à pixels réalisée sous la forme d'un module lumineux, de telle sorte que le motif lumineux (24, 26) respectif est formé par une pluralité de points de motif qui peuvent être produits par le phare (18, 20) respectif, le phare (18, 20) respectif comprenant une pluralité de LED au moyen desquelles les points de motif peuvent être générés, et lorsque des motifs lumineux (24, 26) sont produits simultanément, un premier des motifs lumineux (24, 26) est agencé au moins en partie au-dessus du second motif lumineux (26) dans une direction verticale (36) par rapport à la position de montage du dispositif de phares (12),
• une première partie (T1) du premier motif lumineux (24) étant agencée dans la direction verticale au-dessus d'une seconde partie (T2) du second motif lumineux (26), la première partie (T1) étant agencée dans une première région de motif lumineux (LB1) et la seconde partie (T2) étant agencée dans une seconde région de motif lumineux (LB2), et la première région de motif lumineux (LB1) étant exempte du second motif lumineux (26) et la seconde région de motif lumineux (LB2) étant exempte du premier motif lumineux (24),
**caractérisé en ce que**
• le premier motif lumineux (24) a une première largeur (b1) s'étendant dans la direction transversale de véhicule et le second motif lumineux (26) a une seconde largeur (b2) s'étendant dans la direction transversale de véhicule, les largeurs (b1, b2) étant égales, et
• la première partie (T1) agencée dans la direction verticale au-dessus de la seconde partie (T2) s'étend sur toute la première largeur (b1), de telle sorte que la première partie (T1) est agencée sur toute la première largeur (b1) dans la direction verticale au-dessus de la seconde partie (T2), et la seconde partie (T2) s'étend sur toute la seconde largeur (b2), de telle sorte que la seconde partie (T2) est agencée sur toute la seconde largeur (b2) dans la direction verticale sous la première partie (T1), et
• les motifs lumineux (24, 26) se chevauchent mutuellement dans la direction verticale dans des régions de chevauchement (U1, U2) respectives.

2. Dispositif de phares (12) selon la revendication 1,
**caractérisé en ce que**
lorsque des motifs lumineux (24, 26) sont produits simultanément, le premier motif lumineux (24) a une première hauteur (h1) s'étendant dans une direction verticale (36) et le second motif lumineux (26) a une seconde hauteur (h2) s'étendant dans la direction verticale (36).

3. Dispositif de phares (12) selon la revendication 2,
**caractérisé en ce que**
les régions de chevauchement (U1, U2) ont des étendues respectives s'étendant dans la direction verticale (36) :
- l'étendue de la région de chevauchement (U1) du premier motif lumineux (24) représentant au plus de 30 %, en particulier au plus de 20 % et de manière préférée au plus de 10 %, de la première hauteur (h1) et/ou
- l'étendue de la région de chevauchement (U2) du second motif lumineux (26) représentant au plus de 30 %, en particulier au plus de 20 % et de manière préférée au plus de 10 %, de la seconde hauteur (h2).

4. Dispositif de phares (12) selon l'une des revendications précédentes,
**caractérisé en ce que**
lorsque les motifs lumineux (24, 26) sont produits simultanément :
- l'un des motifs lumineux (24, 26) est une surface lumineuse contigüe, ininterrompue, polygonale ou ronde, une surface non éclairée n'étant pas entourée par le premier motif lumineux (24, 26) ; et
- l'autre motif lumineux (26, 24) comportant au moins une région partielle courbe ou incurvée qui entoure une surface non éclairée.

5. Véhicule comportant au moins un dispositif de phares (12) selon l'une des revendications précédentes.

6. Véhicule selon la revendication 5,
**caractérisé en ce que**
les phares (18, 20) sont immobiles par rapport à une carrosserie (14) du véhicule dont l'habitacle est délimité par la carrosserie (14).

7. Procédé pour faire fonctionner un dispositif de phares (12) d'un véhicule, le dispositif de phares (12) comportant deux phares (18, 20) espacés l'un de l'autre dans une direction transversale de véhicule (22), lesquels phares produisent simultanément un motif lumineux (24, 26) respectif.
le phare (18, 20) respectif étant une source de lumière à pixels réalisée sous la forme d'un module lumineux, de telle sorte que le motif lumineux (24, 26) respectif est formé par une pluralité de points de motif qui peuvent être produits par le phare (18, 20) respectif, le phare (18, 20) respectif comprenant une pluralité de LED qui produisent les points de motif, et lorsque les motifs lumineux (24, 26) sont produits simultanément, un premier des motifs lumineux (24, 26) est agencé au moins en partie au-dessus du second motif lumineux (26) dans une direction verticale (36),
• une première partie (T1) du premier motif lumineux (24) étant agencée dans la direction verticale au-dessus d'une seconde partie (T2) du second motif lumineux (26), la première partie (T1) étant agencée dans une première région de motif lumineux (LB1) et la seconde partie (T2) étant agencée dans une seconde région de motif lumineux (LB2), et la première région de motif lumineux (LB1) étant exempte du second motif lumineux (26) et la seconde région de motif lumineux (LB2) étant exempte du premier motif lumineux (24),
**caractérisé en ce que** :
• le premier motif lumineux (24) a une première largeur (b1) s'étendant dans la direction transversale de véhicule et le second motif lumineux (26) a une seconde largeur (b2) s'étendant dans la direction transversale de véhicule, les largeurs (b1, b2) étant égales, et
• la première partie (T1) agencée dans la direction verticale au-dessus de la seconde partie (T2) s'étend sur toute la première largeur (b1), de telle sorte que la première partie (T1) est agencée sur toute la première largeur (b1) dans la direction verticale au-dessus de la seconde partie (T2), et la seconde partie (T2) s'étend sur toute la seconde largeur (b2), de telle sorte que la seconde partie (T2) est agencée sur toute la seconde largeur (b2) dans la direction verticale sous la première partie (T1), et
• les motifs lumineux (24, 26) se chevauchent mutuellement dans la direction verticale dans des régions de chevauchement (U1, U2) respectives.

8. Procédé selon la revendication 7,
**caractérisé en ce que**
lorsque le véhicule aborde un virage, l'un des motifs lumineux est en mouvement par rapport à une carrosserie du véhicule dont l'habitacle est délimité par la carrosserie, tout en empêchant un mouvement résultant de l'autre motif lumineux par rapport à la carrosserie.
